# EUROPEAN PATENT APPLICATION

(11) **EP 1 289 179 A1**
(43) Date of publication of application: **05.03.2003**
(21) Application number: 01307262.4
(22) Date of filing: 28.08.2001
(51) Int. Cl.: H04L 1/00

(54) **A wireless telecommunications network, a user terminal therefor, a base station therefor, and a method of telecommunication**

(71) Applicant: LUCENT TECHNOLOGIES INC., Murray Hill, New Jersey 07974-0636 (US)
(72) Inventor: Luschi, Carlo, Oxford (GB); Samuel, Louis Gwyn, Abbey Meads, Swindon (GB)
(74) Representative: Sarup, David Alexander

(57) **Abstract**

A wireless telecommunications network comprises a first terminal (2) and a second terminal (UE), the second terminal including a receiving stage and a processor (10) operative to process signals received from the first terminal and to determine received signal quality. The second terminal also includes a transmitter (Tx) operative to send a feedback signal (QI, RAI) dependent upon the received signal quality to the first terminal provided the change in received signal quality is determined as being more than a predetermined amount.

## Description

### Technical Field

The present invention relates to a wireless telecommunications network comprising a first terminal and a second terminal, a user terminal (UE) for wireless communications, a base station for wireless telecommunications, and a method of wireless telecommunication between a first terminal and a second terminal.

### Background of the Invention

High-speed packet transmission schemes are currently under development in the evolution of third generation (3G) telecommunication systems. Key factors that enable the high performance of these technologies include higher peak data rates via high order modulation such as 16 or 64 quadrature amplitude modulation, fast scheduling of the users within a common shared channel, and the use of multiple antenna techniques for transmission and reception. Features supporting fast scheduling are Hybrid-Automatic Repeat Request (H-ARQ) i.e. ARQ with Forward Error Correction (FEC) coding, and fast rate selection based on feedback of estimated link quality. Fast rate selection, combined with time domain scheduling on the shared channel, enables advantage to be taken of the short-term variations in the signal received by the mobile terminals, so that each user can be served on a constructing fading, i.e. each user is scheduled for transmission so as to minimise the chance of destructive interference.

In cellular communication systems, the quality of a signal received by and sent from a mobile user depends on distances from the serving base station and interfering base stations, path loss (i.e. attenuation), shadowing (signal reduction in the shadow of obstacles), and short-term multipath fading (i.e. scattering). In order to improve the system peak data rates and coverage reliability, link adaptation techniques are used to modify the signal transmitted to and from a particular user to account for variation of the received signal quality. Two link adaptation techniques are Power Control and Adaptive Modulation and Coding (AMC). While the former allocates proportionally more transmitted power to disadvantaged users, with AMC the transmitted power is held constant, and the modulation and coding is changed to match the current channel conditions. In a system implementing AMC, users with favourable channel conditions, e.g. users close to the base station, are typically assigned higher order modulation with higher code rates, which results in higher data rates.

The High Speed Downlink Packet Access (HSDPA) scheme currently under study within the 3rd Generation Partnership Project (3GPP) is based on the use of a forward channel that is time shared by multiple packet data users. This High Speed Downlink Shared Channel (HS-DSCH) is capable of supporting peak rates of up to 15 Mbit/sec. It uses a fixed spreading factor, with the possibility of code multiplexing different users on a given Transmission Time Interval (TTI), which is defined as the duration for which the shared channel is assigned to one user. The possible TTI lengths are 1, 3, 5, or 15 time slots of 0.667 msec.

The HS-DSCH utilizes fast rate selection by Adaptive Modulation and Coding (AMC), where the modulation and coding scheme (MCS) is selected based on the current downlink channel conditions. An estimate of the downlink channel quality can be obtained at the network side using explicit feedback from the user equipment (UE), which can estimate the carrier-to-interference ratio (C/I) from a Common Pilot Channel (CPICH). The feedback information for AMC is needed from all UEs that are in HS-DSCH connected state, which means that signalling can use a significant amount of uplink resources so limiting the total number of possible HSDPA active users.

The HSDPA uplink Dedicated Physical Control Channel (DPCCH) carries, for each UE, link quality information, Ack/NAck for the H-ARQ, and further control information generated by the mobile station. As is known, the H-ARQ scheme operates such that a positive acknowledgement (Ack) that a packet has been correctly received by a mobile station or a negative acknowledgement (NAck)that it has not been correctly received is sent. On receipt by the base station of a negative acknowledgement (NAck) downlink transmission of the packet in question is repeated.

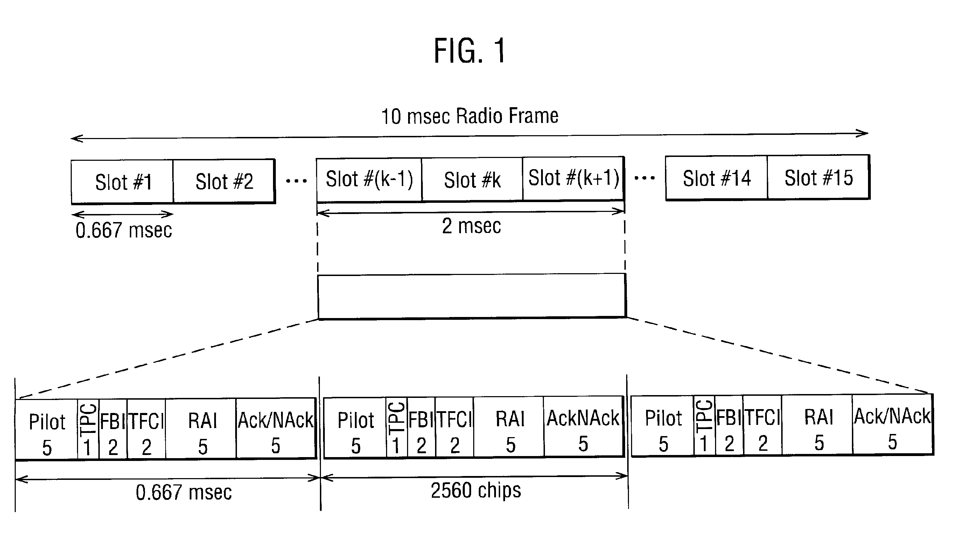

As shown in Figure 1, according to one known format, each UL-DPCCH slot may contain five Pilot bits, one Transmit Power Control (TPC) bit for the downlink DPCCH, two Transport Format Combination Indicator (TFCI) bits indicating the frame format of the associated UL-DPDCH, and two Feedback Information (FBI) bits to support Fast Site Selection and closed-loop transmit diversity, five downlink Quality Information (QI) or Rate and Antenna Information (RAI) bits for link adaptation, and five Ack/NAck bits (one bit with repetition code). The QI or RAI bits indicating carrier-to-interference ratio (C/I) feedback or supportable rate respectively are transmitted over one or more UL-DPCCH slots. For instance, transmission of QI or RAI over 3 slots corresponds to a so-called "granularity" interval of 2 msec for the feedback of measured downlink quality information while the Ack/NAck signals are transmitted every 0.667 msec. Using a spreading factor of 128, the above-mentioned twenty control bits per slot result in 2560 chips per slot. Fifteen slots of duration 0.667 msec constitute a 10 msec frame.

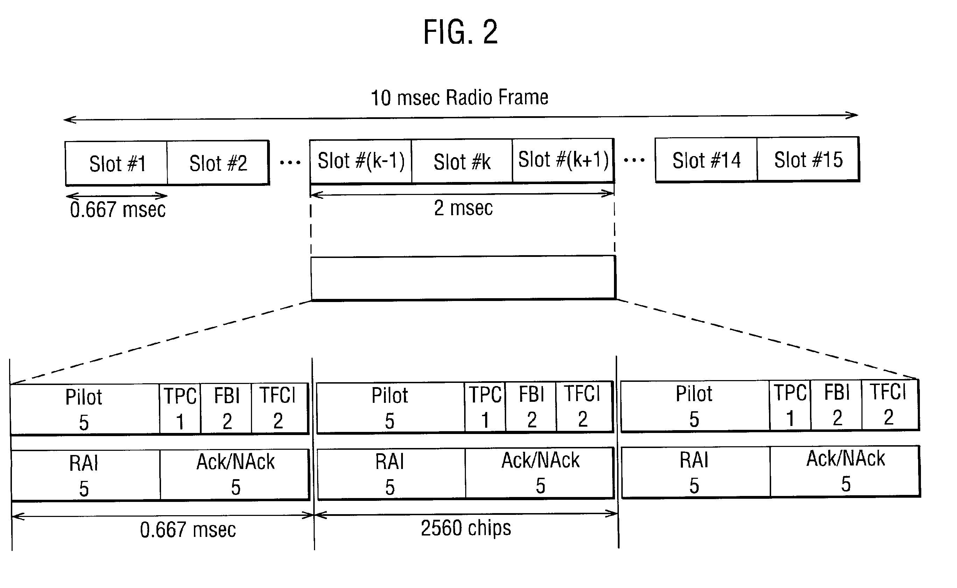

More recent known 3GPP proposals for uplink signalling are based on maintaining the UL-DPCCH structure (including Pilot, TFCI, FBI, and TPC bits), with transmission of downlink quality (QI or RAI bits) and uplink H-ARQ signalling (Ack/NAck bits) by code-division multiplexing with the current uplink physical channels, see Figure 2. This approach is equivalent to the introduction of a second dedicated physical control channel DPCCH for HSDPA H-ARQ. Using a spreading factor of 256 results again in 2560 chips per slot for both DPCCH channels.

The transmission of channel quality information with a high granularity (i.e. every few slots ) is important to enable the system to react to fast channel variations. In fact, at the carrier frequency f_{C} = 2 GHz, a user speed v = 100 Km/h corresponds to a maximum Doppler frequency f_{D} ≈ 185 Hz (i.e., a maximum phase rotation due to Doppler of about π/4 rad/slot). This implies that the multipath channel conditions can vary appreciably from one time slot to the next. Furthermore, the amount of inter-cell and intra-cell interference experienced by each user can change from one time slot to the next.

However, a scheme with a continuous uplink signalling from each user on its DPCCH channel may limit the total number of possible HSDPA active users. A relatively high number of active users may be required in a high-density scenario where on the other hand the channel conditions are almost stationary. In such a situation, one possibility is to reduce the rate of transmission of the channel quality information. This approach has the drawback of introducing a feedback delay, which affects the system throughput performance; in other words, reducing the rate of the channel quality information i.e. feedback implies a trade-off between optimising the efficient use of uplink resources and maintaining the effectiveness of the link adaptation mechanism. To alleviate this problem one could use the downlink power control (DPCCH) information used for the control channels (see for example 3GPP TS 25.211, "3rd Generation Partnership Project; Technical Specification Group Radio Access Network; Physical Channels and Mapping of Transport Channels onto Physical Channels (FDD)", Release 1999, March 2001). However, this does not generally provide the required accuracy, as explained for example in 3GPP TSG RAN WG1/WG2 Tdoc No. 12A010028, "Variable DL Channel Quality Feedback Rate for HSDPA", Sony Corp., April 2001.

### Summary of the Invention

The present invention provides a wireless telecommunications network comprising a first terminal and a second terminal, the second terminal including a receiving stage and a processor (10) operative to process signals received from the first terminal and to determine received signal quality, the second terminal also including a transmitter (Tx) operative to send a feedback signal (QI,RAI) dependent upon the received signal quality to the first terminal provided the change in received signal quality is determined as being more than a predetermined amount.

The present invention in its preferred embodiments has advantages. These advantages include reduced usage of uplink resources and reduced uplink multiple-access interference. For low-mobility scenarios such as where users are static or move slowly e.g. within buildings, this is advantageous in terms of capability to maintain connectivity for a high number of high-speed users, and allows higher traffic data rates on the feedback link. Another advantage is reduced UE power consumption. A further advantage is that the technique does not affect the system's fast rate selection feature, i.e., the link adaptation capability to react to a fast varying channel quality. In fact, the technique automatically takes into account channel variations caused by long-term signal fading due to path loss and shadowing, and short-term fading due to multipath propagation.

Furthermore, preferably the change in received signal quality is that between its latest determined value and the one before.

Preferably the first terminal changes to a different data transmission rate dependent upon said feedback signal. Preferably the first terminal changes to a different modulation and coding scheme (MCS) dependent upon said feedback signal.

Preferably the feedback signal is indicative of the received signal quality (QI) and/or the supportable data rate (RAI) selected in consequence.

Preferably the first terminal is a base station (2) and the second terminal is a mobile user terminal (UE).

Preferably the wireless telecommunications network is a High Speed Downlink Packet Access (HSDPA) network.

Furthermore preferably the wireless telecommunications network is a Universal Mobile Telecommunications (UMTS) or other so-called third generation type.

Furthermore, preferably data packets received by the second terminal are acknowledged (Ack/Nack), and preferably no acknowledgement is sent if the second terminal is not receiving data.

Furthermore, the present invention also preferably relates to a corresponding first terminal. Furthermore, the present invention also preferably relates to a corresponding second terminal. Furthermore, the present invention also preferably relates to a corresponding method of telecommunication. Furthermore, the present invention also preferably relates to a corresponding method of transmission. Furthermore, the present invention also preferably relates to a corresponding method of reception

The present invention also provides a user terminal (UE) for wireless communications comprising a receiving stage, a processor (10) operative to process received signals and to determine received signal quality, and a transmitter (Tx) operative to send a feedback signal (QI,RAI) dependent upon received signal quality provided the change in received signal quality is determined as being more than a predetermined amount.

The present invention also provides a base station for wireless telecommunications comprising a transmitter (Tx) operative to transmit signals to user terminals, means to adjust transmission rate to a user terminal dependent upon a received feedback signal (QI,RAI) from a user terminal which are sent dependent on the change in quality of signal received by the user terminal being determined as being more than a predetermined amount, and means to maintain a transmission rate to a user terminal whilst a respective information signal is not received.

Preferably the base station is a High Speed Downlink Packet Access base station.

The present invention also provides a method of wireless telecommunication between a first terminal (2) and a second terminal (UE), the second terminal processing (10) signals received from the first terminal and transmitting a feedback signal dependent upon received signal quality (QI) to the first terminal provided the change in received signal quality is determined as being more than a predetermined amount.

### Brief Description of the Drawings

A preferred embodiment of the present invention will now be described by way of example and with reference to the drawings, in which:
Figure 1 is a diagrammatic illustration of an Uplink Dedicated Physical Control Channel frame involving transmission of H-ARQ signalling by time division multiplexing,
Figure 2 is a diagrammatic illustration of an Uplink Dedicated Physical Control Channel frame involving transmission of H-ARQ signalling by code division multiplexing, and
Figure 3 is a diagrammatic illustration of a base station and one active mobile station (of many).

### Detailed Description

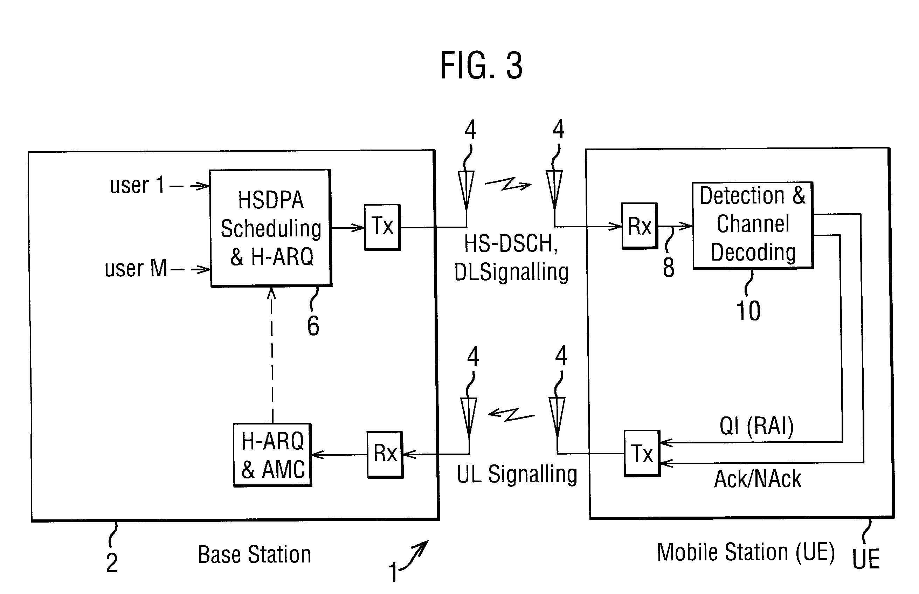

As shown in Figure 3, the preferred network 1 includes a base station 2 and many mobile stations UE communicating therewith ( one UE being shown in Figure 3 for simplicity). The base station 2 and mobile UE each have a transmitter Tx and a receiver Rx, each transmitter Tx and receiver Rx having a respective antenna 4. On the downlink, a High Speed-Downlink Shared Channel (HS-DSCH) is used as described previously.

In the base station 2 a High Speed Downlink Packet Access (HSDPA) scheduler 6 including Hybrid-Automatic Repeat Request (H-ARQ) functionality acts to schedule downlink transmissions to particular mobile stations (UE, user 1 to user m). In each mobile, the packets 8 received by that mobile station UE are processed by a processor block 10 which performs data detection and channel decoding. The Ack/NAck codes and QI (or RAI) codes are fed to the transmitter Tx of the mobile station UE in consequence.

As detailed below, quality-related information (Quality Information QI) or supportable rate information (Rate and Antenna Information RAI) is transmitted on the uplink only when the channel conditions measured by the mobile station UE are changed enough between the latest determined value and the one before, either improved or degraded, to require a new modulation and coding scheme (MCS). Otherwise, the quality information field (or Rate and Antenna Information) of the uplink control channel is simply gated off i.e. not transmitted. In this case, the base station interprets the absence of QI or RAI in a received uplink frame as an implicit confirmation of the acceptability of the current modulation and coding scheme (MCS).

In order to reduce the usage of uplink resources, quality information or information of the supportable rate is transmitted only when the channel conditions actually change. The QI or RAI bits according to Figure 1 or Figure 2 are transmitted only if the channel conditions as measured by the UE are changed enough between the latest determined value and the one before, either improved or degraded, to require a new modulation and coding scheme (MCS). Otherwise, the QI or RAI field is gated off. In this case, the base station is able to interpret the absence of quality information as an implicit confirmation of the current modulation and coding scheme (MCS). Additionally, the Ack/NAck acknowledgement field may be not transmitted (i.e., gated off) if the UE does not have a frame to acknowledge.

The technique allows variations of the signal quality related to long-term signal fading due to path loss and shadowing, and short term fading due to multipath propagation, to be taken into account. Besides reducing the uplink multiple-access interference, the technique is also advantageous in terms of UE power consumption. Moreover, reducing the usage of uplink resources for signalling increases the available uplink user bit rates, which is also important in case of deployment of a concurrent high-speed uplink shared channel (HS-USCH). The technique can be applied to both uplink and downlink control channels.

## Claims

1. A wireless telecommunications network comprising a first terminal and a second terminal, the second terminal including a receiving stage and a processor (10) operative to process signals received from the first terminal and to determine received signal quality, the second terminal also including a transmitter (Tx) operative to send a feedback signal (QI,RAI) dependent upon the received signal quality to the first terminal provided the change in received signal quality is determined as being more than a predetermined amount.

2. A wireless telecommunications network according to claim 1, in which the first terminal changes to a different data transmission rate dependent upon said feedback signal.

3. A wireless telecommunications network according to claim 1 or claim 2, in which the first terminal changes to a different modulation and coding scheme (MCS) dependent upon said feedback signal.

4. A wireless telecommunications network according to any preceding claim, in which the feedback signal is indicative of the received signal quality (QI) and/or the supportable data rate (RAI) selected in consequence.

5. A wireless telecommunications network according to any preceding claim, in which the first terminal is a base station (2) and the second terminal is a mobile user terminal (UE).

6. A wireless telecommunications network according to any preceding claim, which is a High Speed Downlink Packet Access (HSDPA) network.

7. A user terminal (UE) for wireless communications comprising a receiving stage, a processor (10) operative to process received signals and to determine received signal quality, and a transmitter (Tx) operative to send a feedback signal (QI,RAI) dependent upon received signal quality provided the change in received signal quality is determined as being more than a predetermined amount.

8. A base station for wireless telecommunications comprising a transmitter (Tx) operative to transmit signals to user terminals, means to adjust transmission rate to a user terminal dependent upon a received feedback signal (QI,RAI) from a user terminal which are sent dependent on the change in quality of signal received by the user terminal being determined as being more than a predetermined amount, and means to maintain a transmission rate to a user terminal whilst a respective information signal is not received.

9. A base station for wireless telecommunications according to claim 8, which is a High Speed Downlink Packet Access base station.

10. A method of wireless telecommunication between a first terminal (2) and a second terminal (UE), the second terminal processing (10) signals received from the first terminal and transmitting a feedback signal dependent upon received signal quality (QI) to the first terminal provided the change in received signal quality is determined as being more than a predetermined amount.

## Amended claims

### Amended claims in accordance with Rule 86(2) EPC.

**1.** A High Speed Downlink Packet Access (HSDPA) wireless telecommunications network comprising a first terminal and a second terminal, the second terminal communicating with the first terminal over a control channel, the second terminal including a receiving stage and a processor (1 0) operative to process signals received from the first terminal and to determine received signal quality, the second terminal also including a transmitter (Tx) operative to send a feedback signal (QI,RAI) dependent upon the received signal quality to the first terminal over the control channel provided the change in received signal quality is determined as being more than a predetermined amount, the first terminal being operative to change to a different data transmission rate and/or modulation and coding scheme in consequence of receiving said feedback signal, and the transmitter (Tx) being operative not to send the feedback signal if the change in received signal quality is determined as being not more than the predetermined amount.

**2.** A HSDPA wireless telecommunications network according to claim 1, in which the change in received signal quality is that between its latest determined value and the one before.

**3.** A HSDPA wireless telecommunications network according to claim 1 or claim 2, in which the feedback signal is in the form of a Quality Information QAI field or Rate and Antenna Information RAI field in a data packet on the control channel.

**4.** A HSDPA wireless telecommunications network according to any preceding claim, in which the feedback signal is indicative of the received signal quality (QI) and/or the supportable data rate (RAI) selected in consequence.

**5.** A HSDPA wireless telecommunications network according to any preceding claim, in which the control channel is a dedicated physical control channel DPCCH.

**6.** A HSDPA wireless telecommunications network according to any preceding claim, in which the first terminal is a base station (2) and the second terminal is a mobile user terminal (UE).

**7.** A user terminal (UE) for HSDPA wireless communications comprising a receiving stage. a processor (10) operative to process signals received using a modulation and coding scheme and to determine received signal quality, and a transmitter (Tx) operative to send a feedback signal (QI,RAI) dependent upon received signal quality over a control channel provided the change in received signal quality is determined as being more than a predetermined amount so as to cause a change to a different modulation and coding scheme in consequence, the transmitter (Tx) being operative such that the feedback signal is not sent if the change in received signal quality is determined as being not more than the predetermined amount.

**8.** A base station for HSDPA wireless telecommunications comprising a transmitter (Tx) operative to transmit signals to user terminals, means to adjust transmission rate to a user terminal dependent upon a received feedback signal (QI,RAI) being sent over a control channel from a user terminal, the feedback signal being sent if the change in quality of signal received by the user terminal is determined as being more than a predetermined amount, the feedback signal not being sent if the change in received signal quality is determined as being not more than the predetermined amount, and the base station comprising means to maintain a transmission rate to a user terminal whilst the feedback signal is not received.

**9.** A method of HSDPA wireless telecommunication between a first terminal (2) and a second terminal (UE), the second terminal processing (10) signals received from the first terminal and transmitting a feedback signal dependent upon received signal quality (QI) over a control channel to the first terminal provided the change in received signal quality is determined as being more than a predetermined amount, the feedback signal not being sent if the change in received signal quality is determined as being not more than the predetermined amount, the first terminal changing to a different data transmission rate and/or modulation and coding scheme in consequence of receiving said feedback signal.
